## Europäisches Patentamt

## European Patent Office

## Office européen des brevets

(11) Publication number: **0 058 484**
**B1**

# EUROPEAN PATENT SPECIFICATION

(45) Date of publication of patent specification: **12.07.89**

(21) Application number: **82300436.1**

(22) Date of filing: **28.01.82**

(51) Int. Cl.⁴: **B 04 C 3/06,** D 21 D 5/24,
B 01 D 45/12, B 01 D 53/24,
B 01 D 19/00

(54) Improvements in and relating to cyclone separators.

(30) Priority: **14.02.81 GB 8104678**

(43) Date of publication of application:
**25.08.82 Bulletin 82/34**

(45) Publication of the grant of the patent:
**12.07.89 Bulletin 89/28**

(84) Designated Contracting States:
**DE FR GB IT SE**

(56) References cited:
**FR-A-1 314 386**
**FR-A-1 374 128**
**GB-A- 740 588**
**GB-A-1 367 080**
**US-A-3 807 142**

(73) Proprietor: **BELOIT CORPORATION**
**1 St. Lawrence Avenue**
**Beloit Wisconsin 53511 (US)**

(72) Inventor: **Peel, John Derek**
**Holly Bank Ward Lane Disley**
**Stockport Cheshire (GB)**
Inventor: **Knight, Paul Anthony**
**6, Bowland Close Walshaw**
**Bury Lancashire (GB)**

(74) Representative: **Ranson, Arthur Terence et al**
**W.P. Thompson & Co. Coopers Building Church**
**Street**
**Liverpool L1 3AB (GB)**

The file contains technical information submitted after the application was filed and not included in this specification

## Description

The present invention relates to methods of and hydrocyclone separators for separating a relatively light portion of particulate matter from a relatively heavy portion of particulate matter carried by an aqueous fluid mixture of both portions thereof.

In this description and in the claims appended thereto, the term "particles" is intended to include not only solid particles, but also droplets of a liquid, gas bubbles and combinations of solid, liquid and gas particles. In this way it is possible to separate entrained impurities from a fluid, such impurities as ink and rubber or other adhesions sometimes known as "stickies", as well as air and fibres.

The particles may be referred to as being "dense" (heavy) or "light". "Dense" particles are those which have a density greater than that of the fluid in which they are suspended, whilst "light" particles are those which have a density less than that of the fluid. Their size range will normally be limited by devices located upstream or ahead of the cyclone in the cleaning system and by the dimensions of the cyclone. The fluids for which the present invention has been developed are liquids used in paper making, namely pulp stocks containing solid particles suspended in water. In describing the invention hereafter, reference will be made to such pulp stocks. Unless the water density has been altered by solids dissolved therein, the light particles in such stocks will normally have a density less than 1 g/cm$^3$ and the dense particles a density greater than 1 g/cm$^3$.

In most conventional forms of cyclone separators at least one of the outlets for a separated fraction is located in close proximity to the inlet—often towards the top of the device. Such arrangements invariably operate with a reverse vortex action, the liquid being treated initially passing down through the device in a helical path and a fraction thereafter flowing upwardly i.e. in reverse direction within the original helix. Moreover, in most conventional cyclone separators, those fractions (if any) which are extracted at the bottom, or the opposite end to the feed, are usually taken out radially, circumferentially or tangentially. Both these factors involve separated particles traversing or re-crossing the streamline within which they enter the device. It is an object of the present invention to avoid or mitigate these disadvantages.

United States Patent Specification No. 3,807,142 discloses a two-stage separation system for separating the components of a fluid mixture containing them and in the first separation stage uses a pair of axially spaced apart funnel-shaped conical elements one within the other. Fluid to be separated is introduced in a tangential direction into the periphery of the annular space between such elements and travels in a rotating inwardly spiralling trajectory experiencing centrifugal acceleration, causing centrifugal separation of gases and particles. The gas and other components having a lower density then the bulk of the liquid are displaced inwardly toward the surface of the inner conical element whilst the higher density particles and components are centrifuged to the outer conical surface, and the main body of clarified liquid is rotating within the modified conical annular/axial space. The first conical space is coupled by a transition section to a second cylindrical columnar separation stage in which all components of the original fluid execute helical vortex motion and proceed downwardly. An annular doctor knife section skims off the solids and the heavier components which are withdrawn peripherally tangentially; the gases and other lighter components are displaced inwardly toward a central gas core and are withdrawn through an axial suction tube which extends thereinto, and the clarified liquid is removed from between the heavier and lighter components.

According to one feature of the present invention a method of separating an aqueous fluid mixture of particulate matter into two fractions, said two fractions being a relatively light portion of particulate matter and a relatively heavy portion of particular matter in an aqueous fluid, comprises the steps of:

feeding a stream of the fluid mixture into the upper region of a substantially vertically disposed small angle, air-cored conical cyclone separator tangentially to the longitudinal axis of the conical cyclone separator, stabilizing the incoming stream of fluid mixture in the upper regions of the conical cyclone separator, constraining all of the fluid mixture to move in the same axial direction relatively to the longitudinal axis of the conical cyclone separator in substantially streamline flow spirally toward the lower region of the conical cyclone separator,

establishing an air core along the longitudinal axis of the conical cyclone separator,

extracting said fractions from a region adjacent the bottom of the separator through outlets therein remote from the inlet,

intercepting and separating the relatively light portion in a region near the longitudinal axis of the conical cyclone separator within the conical cyclone separator and above the lower end thereof and having an outer diameter greater than the outer diameter of the air core,

guiding all the remaining relatively heavy portion between and intercepted relatively light portion and the interior wall of the conical cyclone separator of the periphery of the lower end thereof, and

discharging both the relatively light and the remaining relatively heavy portion of the fluid mixture axially through only the lower end of the conical cyclone separator.

According to another feature of the present invention an air-cored hydrocyclone separator for separating an aqueous fluid mixture of particulate matter into two fractions, said two fractions being a relatively light portion of particulate matter and a remainder relatively heavy portion of particulate matter in aqueous fluid, comprises:

a small angle, conical cyclone separator comprising a vertically disposed conical chamber having upper and lower ends and a longitudinal axis, a fluid inlet opening only at its upper end and an outlet for each fraction at its lower end, said fluid inlet opening being substantially tangential to longitudinal axis of the cyclone separator, said outlets being concentric with the longitudinal axis and including an outlet opening extending axially downwardly,

means including a stabilizer disposed centrally near the inlet opening and having a wall tapering inwardly toward an end thereof away from the inlet opening and extending forward toward the outlets for guiding the incoming aqueous mixture stream and controlling the extent of roll vortexing, for constraining all of the incoming fluid mixture to move in the same axial direction relatively to the longitudinal axis of the conical chamber in a substantially streamline flow spirally through the conical chamber toward the outlets,

an outlet chamber no smaller in diameter than and disposed about the outlet opening, and

a pipe extending through the outlet chamber and through the outlet opening concentric therewith, and into and above the lower end of the conical chamber of the conical cyclone separator to receive the aqueous mixture of the relatively light portion of the particulate matter which is travelling near the longitudinal axis of the conical cyclone separator,

the outlet chamber receiving all the remaining aqueous mixture of the relatively heavy portion of the particulate matter which is travelling near the conical cyclone separator wall.

The particle content of the outflows depends on the mode of operation of the cyclone and on the particle content of the input flow. Thus, if one output flow is, say a 10% fraction of the input low taken off from the region of the air core adjacent the apex of the cyclone, the 10% fraction will be relatively rich in light particles while the remainder will be relatively poor therein. On the other hand if the 10% fraction is taken off from the lateral boundary of the cyclone at the apex thereof, the 10% fraction will be relatively rich in heavy particles while the remainder will be relatively poor therein.

Thus in a conical hydrocyclone separator embodying the present invention there are two outputs at the bottom of the device.

The separation is caused by the effect that the entrained particles in a cyclone of the liquid in which they are entrained will follow pathways which tend to concentrate the particles in a particular region of the liquid cyclone, and obviate traversing or re-crossing their original streamlines.

It has been found that in the cyclone with entrained particles of the specified specific gravities, the particles move in the direction of the specified outlet in such a manner that they leave the fluid streamlines in which they are first located after entry to the separator, but neither light nor heavy particles re-cross those streamlines to reach their respective outlets. In practice the liquid entraining the particles is introduced generally tangentially into the device through a pipe and entrance port whose cross-sectional shape and entry angle is selected to optimise flow conditions in the separator.

The present invention will be further described by way of example with reference to the accompanying drawings in which:

Figure 1 is a sketch in elevational section of a hydrocyclone separator embodying the present invention, and

Figure 2 is a diagram showing streamline pattern and particle paths on one side of the centre line of the separator of Figure 1.

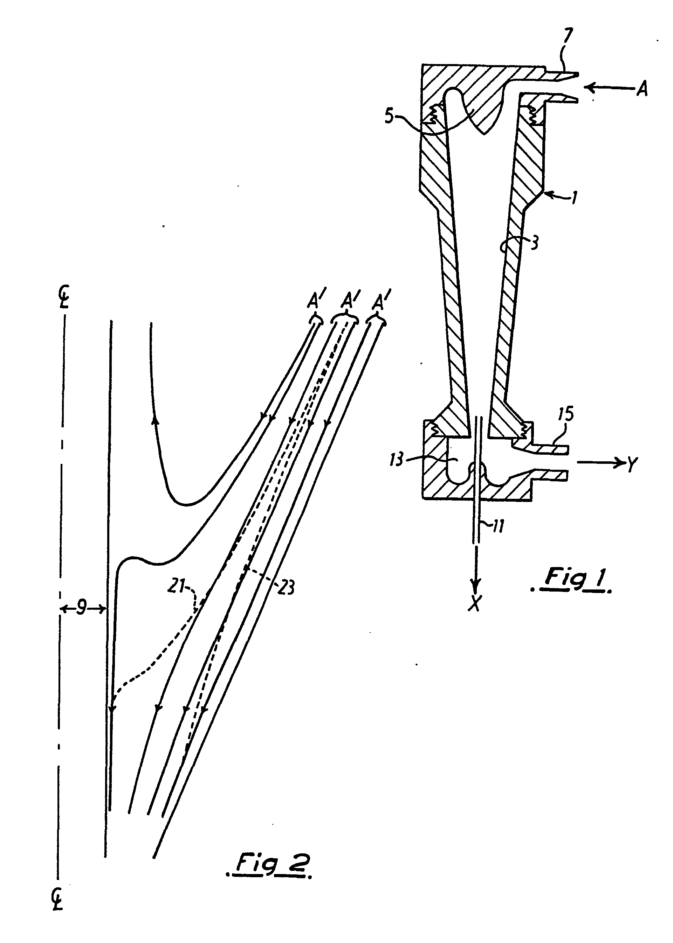

Referring to Figure 1, the separator shown generally at 1, is a small-angle conical cyclone separator designed to separate a liquid input into two fractions, namely a light reject flow X and an accept flow Y, both of which are taken off at the bottom end of the device. The separator does not have to be strictly conical, e.g. it may be in the form of a surface of revolution of a slightly curved line, which may be curved convexly or concavely with respect to the axis of rotation. The separator provides a conical-shaped vessel 3 at the top of which is an inlet arrangement 7 for tangentially injecting, under pressure, a liquid feed A with the particles to be separated therefrom entrained therein. The inlet feed liquid flows around a centrally located core stabiliser 5, of approximately conical shape, whose apex may extend considerably into the separator, thereby also controlling the extent of roll vortexing as described below. It will be noted that the inlet 7 is remote (i.e. at the opposite end of the separator) from all the outlets as hereafter described. The liquid fed in through inlet 7 swirls around within the separator at sufficient velocity to form a unidirectional flow cyclone with a central air core 9 (see Fig. 2). One fraction of the liquid, constituting a light reject flow X, is removed axially from the separator through a bottom outlet pipe 11, which may be adjustable in axial position, closely adjacent the air core and near the cyclone apex, while the remainder, constituting an "accept" flow Y, passes into an output chamber 13 from where the liquid as an acceptable fraction Y passes from the separator via an outlet 15. It is an important aspect of this invention that the inlet is at the top of the separator, remote from all outlets and that one of the separated fractions is extracted axially at the bottom and from a region close to the apex.

If the liquid in this instance contains both light and heavy particles, then the heavy particles form part of the accept fraction Y and only the light particles are contained in the light reject fraction X. Referring to Figure 2, it will be seen that the light and heavy particles in each constituent streamline A' follow different paths 21, 23 respectively, indicated in broken lines. It is important to note that the particles leave the inlet streamline A' in which they are first located, and do not subsequently re-cross that streamline as they separate into their individual fractions. The light particles generally move inwardly along path 21 towards the air core 9 while the heavy particles move along path 23 towards the wall of the separator, the streamlines inbetween thus becoming depleted or starved of particles.

The flow in the outer region of the cyclone is similar to that achieved in a conventional conical cyclone separator in which accept (acceptable) and sometimes a reject are taken out by a vortex finder in their upper regions of the conical vessel in the vicinity of the outlet. Similarly the flow is dominated by a substantial roll vortex and possibly a weaker secondary vortex, but, in this instance, there is a sink flow due to the bottom extraction of both the reject X and accept Y, and the fact that one of these fractions is extracted axially. Thus, the conventionally achieved roll vortex is dragged down into the cyclone, which acts as a uni-directional flow arrangement with no net upward or reverse flow.

Knowing the amount of reject flow X through the outlet pipe 11, the extent of separation of the various sizes of particles can be calculated, it being understood that dense particles are considered to be captured if they reach the boundary side wall of the separator. It has been found that the illustrated cyclone deals equally well with both light particles and dense particles, assuming that the latter are required to be located in the accept flow Y. This is in contrast to the conventional cyclone separator which is much less effective with the light particles than it is with dense particles.

In the operation of conventional separators having an inner vortex finder for taking off the light reject and an outer vortex finder for taking off the accept with both finders located at the wide end of the conical vessel of the separator, it has been observed that light particles leaving a streamline re-cross the streamline of their trajectories to their outlet.

Also, some of the fluid going into conventional cyclones flows directly into the vortex finders and hence out of the apparatus without being subjected to the cyclone action. This effect is known as "short circuiting" or leakage. Both of these effects reduce the efficiency of the cyclone, and are avoided by the present invention. The first effect is avoided by virtue of the fact that there is no net flow upwardly (in a reverse direction) through the cyclone, and the second by virtue of the fact that the accept is physically located at the opposite end of the cyclone to the input.

It has also been found that the illustrated cyclone gives rise to substantially better separation than that achieved in conventional ones when measured at similar levels of energy consumption. The reject liquid flow is also substantially lower so that, in the cleaning of paper pulp suspensions, the reject rate of fibre is lower.

## Claims

1. A method of separating an aqueous fluid mixture of particulate matter into two fractions, said two fractions being a relatively light portion of particulate matter and a relatively heavy portion of particulate matter in an aqueous fluid, comprising the steps of:
feeding a stream (A) of the fluid mixture into the upper region of a substantially vertically disposed, small angle, air-cored, conical cyclone separator tangentially to the longitudinal axis of the conical cyclone separator, and stabilizing the incoming stream of fluid mixture in the upper region of the conical cyclone separator,
constraining all of the fluid mixture to move in the same axial direction relatively to the longitudinal axis of the conical cyclone separator in substantially streamline flow spirally toward the lower region of the conical cyclone separator,
establishing an air core (9) along the longitudinal axis of the conical cyclone separator,
extracting said fractions from a region adjacent the bottom of the separator through outlets therein remote from the inlet,
intercepting and separating the relatively light portion (X) in a region near the longitudinal axis of the conical cyclone separator within the conical cyclone separator and above the lower end thereof and having an outer diameter greater than the outer diameter of the air core (9);
guiding all the remaining relatively heavy portion (Y) between the intercepted relatively light portion (X) and the interior wall of the conical cyclone separator to the periphery of the lower end thereof, and
discharging both the relatively light and the remaining relatively heavy portions of the fluid mixture axially through only the lower end of the conical cyclone separator.

2. A method as claimed in claim 1 in which the separation of the relatively heavy and relatively light portions (Y; X) of the fluid mixture is physically accomplished at an adjustable position along the longitudinal axis of the cyclone separator.

3. A method as claimed in claim 1 or 2 in which the air core is established from substantially the top to the bottom of the conical cyclone separator.

4. An air-cored hydrocyclone separator for separating an aqueous fluid mixture of particulate matter into two fractions, said two fractions being a relatively light portion of particulate matter and a remainder relatively heavy portion of particulate matter in aqueous fluid, comprising:
a small angle, conical cyclone separator comprising a vertically disposed conical chamber having upper and lower ends and a longitudinal axis, a fluid inlet opening (7) only at its upper end and an outlet (11, 15) for each fraction at its lower end, said fluid inlet opening being substantially tangential to the longitudinal axis of the cyclone separator, said outlets being concentric with the longitudinal axis and including an outlet opening extending axially downwardly,

means including a stabilizer disposed centrally near the inlet opening and having a wall tapering inwardly toward an end thereof away from the inlet opening and extending forward toward the outlets for guiding the incoming aqeuous mixture stream and controlling the extent of roll vortexing, for constraining all of the incoming fluid mixture to move in the same axial direction relatively to the longitudinal axis of the conical chamber in a substantially streamline flow spirally through the conical chamber toward the outlets,

an outlet chamber (13) no smaller in diameter than and disposed about the outlet opening, and

a pipe (11) extending through the outlet chamber (13) and through the outlet opening concentric therewith, and into and above the lower end of the conical chamber of the conical cyclone separator to receive the aqueous mixture (X) of the relatively light portion of the particulate matter which is travelling near the longitudinal axis of the conical cyclone separator,

the outlet chamber receiving all the remaining aqueous mixture (Y) of the relatively heavy portion of the particulate matter which is travelling near the conical cyclone separator wall.

**Patentansprüche**

1. Verfahren zum Trennen Partikel enthaltenden wäßrigen Flüssigkeitsmischung in zwei Fraktionen, wobei die zwei Fraktionen einen verhältnismäßig leichten Partikel enthaltenden Teil und einen verhältmäßig schweren Partikel enthaltenden Teil in einer wäßrigen Flüssigkeit darstellen, mit den Schritten:

einen Strom (A) der Flüssigkeitsmischung dem oberen Bereich eines im wesentlichen vertikal angeordneten, kleinwinkligen, luftgekühlten, konischen Zyklonalscheiders tangential zur Längsachse des konischen Zyklonalscheiders zuzuführen und den zuströmenden Strom der Flüssigkeitsmischung in dem oberen Bereich des konischen Zyklonalscheiders zu stabilisieren,

die gesamte Flüssigkeitsmischung zur Bewegung in der gleichen Axialrichtung wie die Längsachse des konischen Zyklonalscheiders in einer wesentlich zirkulationsfreien Potentialströmung spiralförmig in Richtung auf den unteren Bereich des konischen Zyklonalscheiders zu zwingen,

einen Luftkern (9) entlang der Längsachse des konischen Zyklonalscheiders aufzubauen,

die Fraktionen aus einem dem Boden des Scheiders naheliegenden Bereich über Auslässe, die in diesem Scheider von dem Einlaß entfernt sind, zu extrahieren,

den verhältnismäßig leichten Teil (X) in einem Bereich in der Nähe der Längsachse des konischen Zyklonalscheiders innerhalb des konischen Zyklonalscheiders und oberhalb dessen unterem Ende aufzufangen und abzutrennen, und wobei dessen Außendurchmesser größer als der Außendurchmesser des Luftkerns (9) ist,

den gesamten übrigen, verhältnismäßig schweren Teil (Y) zwischen dem aufgefangenen, verhältnismäßig leichten Teil (X) und der Innenwand des konischen Zyklonalscheiders der Peripherie von dessen unterem Ende zuzuführen, und

sowohl den verhältnismäßig leichten als auch den übrigen, verhältnismäßig schweren Teil der Flüssigkeitsmischung axial nur durch das untere Ende des konischen Zyklonalscheiders auszustoßen.

2. Verfahren nach Anspruch 1, wobei die Trennung des verhältnismäßig schweren und des verhältnismäßig leichten Teils (Y; X) der Flüssigkeitsmischung an einer verstellbaren Stellung entlang der Längsachse des Zyklonalscheiders physikalisch durchgeführt wird.

3. Verfahren nach Anspruch 1 oder 2, wobei der Luftkern im wesentlichen von der Oberseite bis zum Boden des konischen Zykonalscheiders aufgebaut wird.

4. Hydrozyklonscheider mit Luftkern zur Trennung einer Partikel enthaltenden, wäßrigen Flüssigkeitsmischung in zwei Fraktionen, wobei die zwei Fraktionen einen verhältnismäßig leichten Partikel enthaltenden Teil und einen verhältnismäßig schweren Partikel enthaltenden Teil in einer wäßrigen Flüssigkeit darstellen, mit:

einem kleinwinkligen, konischen Zyklonalscheider mit einer vertikal angeordneten konischen Kammer, die obere und untere Enden und eine Längsachse aufweist, einer Flüssigkeitseinlaßöffnung (7) an nur seinem oberen Ende, und einem Auslaß (11, 15) für jede Fraktion an seinem unteren Ende, wobei die Flüssigkeitseinlaßöffnung im wesentlichen tangential zur Längsachse des Zyklonalscheiders ist, die Auslässe konzentrisch mit der Längsachse sind, und einer Auslaßöffnung, die sich axial nach unten erstreckt,

einer Einrichtung, die einen zentral, in der Nähe der Einlaßöffnung angeordneten Stabilisator einschließt und eine Wand aufweist, die sich nach innen auf das von der Einlaßöffnung entfernte Wandende hin verjüngt und sich nach vorne auf die Auslässe zu erstreckt, um den zuströmenden wäßrigen Mischungsstrom zu leiten und das Ausmaß an Roll-Wirbelung zu steuern, um die gesamte zuströmende Flüssigkeitsmischung zu zwingen, sich in der gleichen axialen Richtung wie die zur Längsachse der konischen Kammer in einer im wesentlichen zirkulationsfreien Potentialströmung spiralförmig durch die konische Kammer auf die Auslässe zu zu bewegen,

einer Auslaßkammer (13), die im Durchmesser nicht kleiner als die Auslaßöffnung ist und um diese angeordnet ist, und

einem Rohe (11), das sich durch die Auslaßkammer (13) und durch die mit dieser konzentrisch angeordneten Auslaßöffnung und in die konische Kammer des konischen Zyklonalscheiders hinein und über deren unteres Ende hinaus erstreckt, um die wäßrige Mischung (X) des verhältnismäßig leichten Partikel enthaltenden Teils, das in der Nähe der Längsachse des konischen Zyklonalscheiders bewegt wird, aufzunehmen, wobei die Auslaßkammer die gesamte übrige wäßrige Mischung (Y) des verhältnismäßig schweren Partikel enthaltenden Teils, das sich in der Nähe der konischen Zyklonalscheiderwands bewegt, aufnimmt.

**Revendications**

1. Procédé de séparation d'un mélange en fluide aqueux de matière particulaire en deux fractions, lesdites fractions étant une portion de matière particulaire relativement légère et une portion de matière particulaire relativement lourde dans un fluide aqueux, selon lequel:

—on envoie une courant (A) du mélange fluide dans la région supérieure d'un séparteur cyclone, conique, à âme d'air, de petit angle, disposé sensiblement verticalement, tangentiellement à l'axe longitudinal du séparateur cyclone conique et on stabilise le courant d'entrée de mélange fluide dans la région supérieure du sépareteur cyclone conique,

—on contraint tout le mélange fluide à se déplacer dans la même direction axiale relativement à l'axe longitudinal du séparateur cyclone conique, en courant sensiblement naturel, en spirale vers la région inférieure du séparateur cyclone conique,

—on établit une âme d'air (9) le long de l'axe longitudinal du séparateur cyclone conique,

—on extrait lesdites fractions d'une région adjacente au fond du séparateur par des orifices de sortie dans celui-ci éloignés de l'entrée,

—on intercepte et sépare la portion relativement légère (X) dans une région voisine de l'axe longitudinal du séparateur cyclone conique, dans le séparateur cyclone conique et au-dessus de l'extrémité inférieure de celui-ci et ayant un diamètre extérieur supérieur au diamètre extérieur de l'âme d'air (9),

—on guide toute la portion relativement lourde (Y) restante, entre la portion relativement légère (X) interceptée et la paroi intérieure du séparateur cyclone conique, vers la périphérie de l'extrémité inférieure de celui-ci et,

—on évacue à la fois les portions relativement légère et relativement lourde restante du mélange fluide axialement par l'extrémité inférieure seulement du séparateur cyclone conique.

2. Procédé selon la revendication 1, dans lequel la séparation des portions (Y; X) relativement légère et relativement lourde du mélange fluide est effectuée physiquement dans une position réglable le long de l'axe longitudinal du séparateur cyclone conique.

3. Procédé selon la revendication 1 ou 2, dans lequel l'âme d'air est établie sensiblement du haut en bas du séparateur cyclone conique.

4. Séparateur hydrocyclone à âme d'air pour séparer un mélange en fluide aqueux de matière particulaire en deux fractions, lesdites fractions étant une portion de matière particulaire relativement légère et une portion restante en matière particuliare relativement lourde dans une fluid aqueux, comprenant un séparateur cyclone conique de petit angle comprenant une chambre conique disposée verticalement à extrémités supérieure et inférieure et axe longitudinal, un orifice d'entrée de fluide (7) seulement à son extrémité supérieure et une sortie (11, 15) pour chaque fraction à son extrémité inférieure, ledit orifice d'entrée de fluide étant sensiblement tangentiel par rapport à l'axe longitudinal du séparateur cyclone, lesdites sorties étant concentriques avec l'axe longitudinal et comprenant un orifice de sortie s'étendant axialement vers le bas,

—des moyens incluant un stabilisateur disposé centralement au voisinage de l'orifice d'entrée et ayant une paroi s'effilant vers l'intérieur en direction d'une extrémité de celle-ci, s'écartant de l'orifice d'entrée et s'étendant ensuite vers les sorties pour guider le courant de mélange aqueux arrivant et commander l'amplitude du mouvement tourbillonaire en vue de contraindre tout le mélange fluide arrivant de se déplacer dans la même direction axiale relativement à l'axe longitudinal de la chambre conique, en un courant sensiblement naturel, en spirale, par la chambre conique vers les sorties,

—une chambre de sortie (13) pas plus petite en diamètre que, et disposée autour de, l'orifice de sortie, et

—un tuyau (11) traversant la chambre de sortie (13) et l'orifice de sortie concentrique à celle-ci, et dans et au-dessus de l'extrémité inférieure de la chambre conique du séparateur cyclone conique, pour recevoir le mélange aqueux (X) de la portion relativement légère de la matière particulaire qui se déplace au voisinage de l'axe longitudinal du séparateur cyclone conique,

—la chambre de sortie recevant tout le mélange aqueux restant (Y) de la portion relativement lourde de la matière particulaire qui se déplace au voisinage de la paroi de séparateur cyclone conique.

_Fig_1_.

_Fig_2_.